# EUROPEAN PATENT SPECIFICATION

(11) **EP 1 502 666 B1**
(45) Date of publication and mention of the grant of the patent: **18.08.2010**
(21) Application number: 04103526.2
(22) Date of filing: 22.07.2004
(51) Int. Cl.: B09B 1/00, B65D 90/02

(54) **Method of removal of landfills and storage of municipal and/or industrial waste materials in concrete silos**
Verfahren zum Beseitigen von Aufschüttungen und Lagerung von städtischem und/oder industriellem Müll in Silos aus Beton
Méthode pour l'enlèvement de remblats et stockage de déchets municipaux et/ou industriels dans des silos en béton

(30) Priority: 01.08.2003 PL 36152903
(43) Date of publication of application: 02.02.2005
(73) Proprietor: Przedsiebiorstwo "ECO-COMPLEX" Anna Dobrzanska, 42-500 Bedzin (PL)
(72) Inventor: Dobrzanski, Przemyslaw, 41-200 Sosnowiec (PL); Rzepka, Jerzy, 40-866 Katowice (PL); Dobrzanski, Henryk, 41-200 Sosnowiec (PL); Dobrzanski, Andrzej, 42-500 Bedzin (PL)
(74) Representative: Malcherek, Piotr

(56) References cited:
- WO-A-95/16523
- FR-A- 2 397 287
- US-A- 5 035 537

## Description

### Technical Field

Subject of present invention constitutes the method of removal of landfills and storage of the municipal and/or industrial waste materials, in particular chemically active, poisonous and asbestos and heavy metals containing wastes in concrete silos. A prior art landfill reclamation method is disclosed in WO 95/16523. The invention optimizes the process of removal of open waste dumps (landfills) affecting detrimentally the natural environment, and in particular the health of local inhabitants and enables safe storage of waste materials keeping full isolation from the surroundings.

Hitherto known and applied methods of waste storage at open dumping grounds (landfills) are ineffective ones and provide only partial protection against harmful impact.

### Background Art

One of the already known methods consist in execution of impermeable substrate on waste storage site, whereas huge quantities of wastes are heaped (piled) on open-field. Partial securing/protection of landfill by ridging (covering) with soil layer is not done before lapse of several years, and as the time passes a partial land reclamation takes place. The described method does not ensure the full isolation of wastes from the environment and provokes during many years their detrimental impact to the surroundings, thus giving an illusory conviction of ecological action.

Other well known method of waste utilization, especially municipal wastes, constitutes their disposal by incineration in high temperatures. For this purpose it is necessary erection of modern plant complying with all environmental standards and regulations, including obtainment of consent (approval) of local inhabitants for its location. It requires gaining of substantial financial resources (means), and construction cycle of such plant lasts several years. The incinerating plants are particularly useful for utilization of the currently occurring municipal wastes, however, when disposing the existing and depositing from many years huge quantities of waste materials, this process would last several years taking into account its processing capacities. Furthermore, the incinerating plants would have to be erected in direct vicinity of landfill in order to avoid additional cost of waste transport, in many cases from distant places. These are definite technical as well as economical limitations (barriers).

From the state of technology there are also known elaborations dealing with storage of wastes on the previously prepared impermeable substrate, whereon wastes are heaped, these wastes being earlier mixed with power plant dust, which provide merely faster land reclamation but as a consequence wastes are stored on the open-fields and are not isolated from the natural environment.

### Disclosure of Invention

### Technical problem

The aim of present invention is a method of removal of landfills (waste dumps), especially of those wastes, which are particularly dangerous for the environment, in concrete silos fully isolated from the surroundings. The concrete silos are erected directly on the existing landfill and have big cubic capacities, for instance from 20.000 to 150.000 tons and more. Certain quantity of wastes is being displaced at small distance, about 100 m, with simultaneous attainment of clean subsoil. The excavation for silos is carried-out using a high-capacity mining combine, which can work efficiently regardless of compactness of the subsoil (substrate). Technical solution

In accordance with the invention, a method of landfills removal of and storage of the municipal and/or industrial waste materials, in particular chemically active, poisonous, asbestos and heavy metals containing wastes, by storing them in impermeable concrete silos made of mix of mineral aggregates and cement, is characterized by that, that the construction site is delimited on the premises of the existing landfill or in its nearest vicinity, and then the silo is constructed by stages, by excavating annular sections wherein a first excavations having a depth of 1,5 - 2,0 m and a diameter in the range of 50.0-100,0 m is carried out; then shields of single-use planking are mounted around the whole circumference of the excavation walls after removing the sound soil from the first excavation and putting it aside in a previously prepared place free from waste materials and polluted subsoil. The concrete, preferably of semi-dry consistence and reinforced with polypropylene fibers, is sprayed on the walls using air guns; after that the concrete surface is smoothened and the insulating coating is applied on it forming first ring of the silo. Afterwards, the second and next identical rings, are executing in cycles up to the desired depth, of 15,0 m. Then the thick-plastic concrete is poured forming the bottom of the silo. The vertical insulation of the silo walls is connected with an horizontal insulation of the silo bottom. When the silo is ready, the wastes together with polluted soil removed from adjacent area are relocated into the silo and then, when the silo is filled completely, a concrete cover in form of flattened dome is carried out, this cover being additionally protected using insulating foil. The filled and sealed silo is covered by putting a layer of unpolluted soil gained from the previous excavation, and the excess of the soil is used for leveling out of the waste removal area contributing thus to full land reclamation of the landfill space.

### Advantageous effects

When applying the invention one can get the silo of big capacities from 50.000 m³ to 120.000 m³ on the premises of the existing landfill without need of waste relocation to considerable distances. Furthermore, the sound soil is gained simultaneously from the excavation; this soil is being severed enabling full land reclamation of the area occupied earlier by depositing wastes. In this situation there is no need to transport clean (unpolluted) soil, frequently from distant areas and to gain it through environment degradation in other place. The municipal or industrial wastes stored in concrete silos are completely isolated from the environment in relatively short time. During one year about 1.000.000 m³ of waste materials are placed in several silos, what affords possibilities for full removal of landfills having huge spatial volume at rate which does not exist in other solutions.

When applying the invention, it is not necessary to transport wastes through loading and unloading operations, what allows to suppress (eliminate) enormous dustiness by volatile matters from waste materials. There is no need to build piles and heaps or dumping grounds occupying substantial ground areas, which render impossible full land development. Furthermore, we can eliminate the washing out of poisonous substances from these dumping grounds through rainfalls (precipitations) during long time till full land reclamation.

Thanks to adoption in this invention of mining equipment and methods to carry out the excavations for silos we can avoid to involve big quantity of conventional construction machinery and equipment necessary for execution of earth work (diggings), such as: excavators, dozers, loaders, cranes, pile-drivers, dump-trucks with high load capacities and lot of other equipment. All transport operations to remove earth from excavation and to relocate wastes from the landfill area into silo are carried out in environment-friendly manner using closed pipe-belt conveyors.

The advantage of invention is a removal from the natural environment of dangerous, pathogenic substances, frequently poisonous occurring in industrial waste and suppression of municipal waste materials having enormous noxiousness for the local inhabitants because of stink and smokiness from permanently smouldering landfills. Another advantage of this invention consists also in avoiding of necessity to carry out the disinsectization and deratting on the grounds recovered after removal of depositing wastes.

In these days more and more frequently occur problems with possibility of waste storage (disposal), especially of municipal wastes, on hitherto existing landfills (dumping grounds) in big urban agglomerations.

After many years of exploitation, the existing landfills are completely filled and do not fulfill its hitherto executed role, provoking a situation, which is defined as state of ecological disaster.

The present invention suppresses in effective and economical manner this menace and enables continued storage of waste materials in concrete silos on the existing premises, occupying for this purpose a small underground portion of landfill.

For execution of silos the basic or alternative technical solutions can be used.

### Best Mode for Carrying Out the Invention

Before commencement of digging work to carry out excavation for silo, on the existing landfill or nearby, at nearest distance, the depositing waste is removed from the delimited area together with polluted substrate (soil) and relocated away at small distance. Afterwards the digging of first excavation (not less than 50 m of diameter and depth up to 2,0 m) is commenced. This excavation is driven according to the mining method from above downwards, in cycles, using mining combine with rotational cutting (ripping) head, this combine being integrated with a pipe-belt conveyor. The earth removed from excavation is stored on the previously prepared site at the nearest distance form the silo under construction. Then, the shields of planking are erected in completed excavation; these shields create full cylindrical planking on the whole circumference of excavation. The concrete mix is sprayed - layer after layer - using air guns under pressure of 6 - 8 MPa in order to get final thickness of about 20 cm. This modified concrete mix is prepared on the basis of mineral aggregate and cement.

Thanks to application of polypropylene fibers in recipe of the concrete mix, we get the reinforced (armoured) concrete without need to use reinforcing steel, completely corrosion-resistant and with crushing strength in the range from 30 MPa to 70 MPa depending on the imposed requirements. The concrete applied in semi-dry form contains small amount of water what allows to avoid formation of capillaries during the cement setting process, and as consequence of that to avoid of micro-cracks in concrete. The ready concrete is completely waterproof, there is no absorbability thanks to applied plasticizers and additives and is resistant to influence of chemical agents, in particular poisonous ones, occurring in different types of waste materials. In addition, the smoothened inner surfaces of concrete silos are protected by means of the polymer-resin coatings with unwoven fabric; these coatings being applied directly on the surface of concrete what brings about its full chemical resistance.

When using a method according to the invention we can obtain the concrete structures of the silos walls of cylindrical shape and having the following dimensions : diameter from 50 m to 100 m and depth in the range of 7 - 10 cycles, i.e. 14.0 to 20.0 m. The bottom of the silos is carried out according to conventional methods; on the previously prepared substrate the thick-plastic concrete reinforced with polypropylene fibers is poured out, alternatively a conventional steel reinforcement is used observing the design and technological requirements. The horizontal insulation is carried out connecting it with previously prepared vertical insulation of the silo walls. In such a manner the silos having huge capacities are obtained - for example 120.000 m<3> and even more, of concrete structure featuring by very advantageous technical and technological parameters.

The silos, after filling and compacting of waste by means of the pipe-belt conveyors and shoveldozers, are covered with the layer of thick concrete poured out and forming a cover having the shape of flattened dome. On so prepared cover the insulating foil is applied with excess material (allowance) beyond the contour of the dome. The previously gained biologically active sound soil (earth) is put on the cover of silos forming the layer of 3.0 - 4.0 m thickness and the remaining soil is levelled within the area of hitherto deposition of waste materials.

### Mode(s) for Carrying Out the Invention

Optionally, the silos are carried out starting the erection process from the silo bottom. For this purpose the excavation having required dimensions is carried out using equipment as described in foregoing example.

Flowing preparation of excavation, the substrate of silo is being compacted first and then the silo bottom is executed by pouring out of thick concrete mix reinforced with polypropylene fibers or conventional reinforcing steel. On the structure of silo bottom the profiled shields of planking are to be assembled; this planking is of cylindrical shape and height of 1.5 - 2.0 m. Afterwards, the concrete mix having required parameters is sprayed from inside of the silo on the planking giving the first ring of the silo. When proceeding in this way several times, the subsequent levels of the concrete silo structure are obtained and finally we get the ready silos keeping the required technical and technological parameters.

Each concrete ring of the silo is ridged gradually with earth gained from excavation (diggings), and after reaching the designed height of the silo its top part is flush with O-level. Then, the silos are filled with waste materials and after compaction of waste the concrete cover having the shape of flattened dome is carried out and the insulating foil is applied as described in foregoing case. The filled and protected silos are ridged with sound soil (earth) gained from excavation and the remaining earth (diggings) is levelled on the surface occupied previously by waste materials; at the same time the land reclamation is achieved. The described invention allows to isolate completely any waste from the natural environment in effective manner and for practically unlimited time.

## Claims

1. A method of landfill removal and storage of municipal and/or industrial waste materials, in particular chemically active, poisonous, asbestos and heavy metals containing waste by storing them in impermeable concrete silos made of a mix of mineral aggregates and cement, comprising the steps of:
- delimiting the construction site to the premises of the existing landfill or its nearest vicinity;
- constructing the silo in stages by excavating annular sections wherein a first excavation having a depth of 1,5 - 2,0 m and a diameter in the range of 50,0 - 100,0m is carried out; and
- mounting shields of single-use planking around the whole circumference of the excavation walls after the removing the sound soil from the first excavation and putting it aside in a previously prepared place free from waste materials and polluted subsoil,
- spraying the walls with concrete reinforced with polypropylene fibres using air guns, preferably in a semi-dry consistency;
- smoothing the concrete surface;
- applying to the prepared concrete an insulation coating which forms a first ring of the silo;
- executing in cycles a second identical and next identical rings until the desired depth of -15,0 m is obtained;
- carrying out the structure of the silo bottom by pouring the thick-plastic concrete and connecting the vertical insulation of the silo walls with an horizontal insulation of the silo bottom;
- relocating the waste, together with the polluted soil, into the silo and,
- after the silo has been completely filled, placing on top of the silo a cover of concrete in the shape of a flattened dome, this cover being additionally protected by means of an insulation foil,
- applying a layer of unpolluted soil gained from the previous excavations on the sealed silo; and
- using the excess soil for leveling out the waste removal area contributing thus to full land reclamation of the landfill space.

## Patentansprüche

1. Verfahren zum von Mülldeponie und Lagerung von Haushalt- und / oder Industriemüll, von chemisch aktiv, giftig, Asbest- und Schwermetallhaltigen Abfälle durch Lagerung des Mülls in den undurchlässigen Betonsilos angefertigt aus Gemisch von Zuschlagstoff und Zement, bestehend aus den folgenden Schritten:
- Abstecken der Baustelle auf dem Gelände des vorhandenen Mülldeponie oder in seiner nähsten Nachbarrschaft;
- Aufrichten von Silo in Stufen durch Ausheben von ringförmigen Sektionen, wobei der erste Erdaushub hat die Tiefe von 1,5 - 2,0 m und Durchmesser von 50,0 - 100,0 m; und
- Einbau der Abschnitte / Schilde von Einwegschalung um den ganzen Umfang der Aushubwände herum nach vorheriger Entfernung des festen Bodens aus dem ersten Aushub und nach Ablegen diese Bodens auf den vorher vorbereiteten Platz frei von Abfallstoffe und verschmutzten Unterbodens,
- Abspritzen der Wände mit polypropylenfaserbewehrtem Beton durch von Mörtelspritzgerbt, wobei der Beton vorteilhaft die halbtrockene Konsistenz aufweist;
- Glätten von Betonoberfläche;
- Anlegen von Isolierbelag auf den so vorbereiteten Beton indem man den ersten Siloring fertigstellt;
- Anfertigung abwechselnd des zweiten und der nächsten identischen Siloringe bis zum Erreichen der gewünschten Tiefe von - 15,0m;
- Ausführung der Konstruktion von Siloboden durch Ausguß des dickflüssigen Betons und Verbindung der senkrechten Isolierung von Silowände mit waagerechter Isolierung von Siloboden;
- Verlagerung von Abfälle zusammen mit dem verschmutzten Unterboden ins Silo, und
- nachdem der Silo völlig ausgefüllt ist, die Abdeckung der obersten Teil des Silos mit einem Betondeckel in Form einer abgeflachten Haube, wobei der Betondeckel zusätzlich mit einer isolierfolie geschützt ist,
- Auftragung auf den hermetisch geschlossen Silo einer Schicht des unverschmutzten Bodens gewonnen aus dem vorherigen Aushub; und
- Anwendung des überschüssigen Bodens für das Planieren des Bereiches nach der Abfallbeseitigung indem man die vollständige Wiederurbarmachung des Mülldeponiegeländes gewährleistet.

## Revendications

1. Procédé de liquidation des décharges des déchets et de stockage des ordures ménagères et/ou déchets industriels, en particulier des déchets chimiquement actifs, toxiques, contenant l'amiante et métaux lourdes par leur stockage dans les silos en béton imperméables fabriqués à partir de granulats et de ciment, comprenant les étapes suivantes :
- implantation de chantier de construction à l'intérieur de la décharge ou dans sa voisinage la plus proche ;
- construction d'un silo en étapes par l'excavation des sections annulaires, ou d'abord l'excavation première ayant une profondeur de 1,5 - 2, 0 m et le diamètre dans l'étendue de 50,0 - 100,0 m est réalisée ; et
- montage des poutre-cloisons du coffrage non-réutilisable autour d'une circonférence entière des parois de l'excavation après l'évacuation préalable d'un sol propre de la première excavation et la remise du celui de côté sur la place préalablement préparé sans des déchets et de sous-sol contaminé,
- projection des parois avec béton armé par fibres polypropylène en utilisant le canon d'air à ciment, le béton ayant avantageusement la consistance semi-sec ;
- planage de la surface de béton ;
- application sur le béton préparé comme ci-dessus de la couche isolante, ce qui resulte en formation de premier anneau de silo ;
- exécution l'un après l'autre de deuxième et des suivantes anneuax identiques jusqu'à l'obtention de la profondeur desirée de - 15,0 m ;
- mise en oeuvre de la construction de fond du silo par la coulée du béton dans l' état épais-liquide ou plastique et l'assemblage d'isolation verticale des parois du silo avec l'isolation horizontale de fond du silo ;
- déplacement des déchets, avec y compris la terre pollue, dans le silo, et
- une fois complétment rempli, le silo est fermé hermétiquement par placement sur sa partie supérieure d'une couvercle en béton ayant une forme de coupole aplatie, cette coupole étant protégée en supplément à l'aide d'un film isolant,
- remblayage du silo étanché en utilisant le sol obtenu des excavations préalables ; et
- utilisation de surplus du sol pour le nivellement de l'espace restée après enlèvement des déchets, alors en contribuant à la récuperation entière du terrain de décharge.
